# EUROPEAN PATENT SPECIFICATION

(11) **EP 2 739 846 B1**
(45) Date of publication and mention of the grant of the patent: **05.08.2015**
(21) Application number: 12740717.9
(22) Date of filing: 29.06.2012
(51) Int. Cl.: F03C 1/047, F03D 1/00

(54) **FLUID WORKING MACHINE AND WIND TURBINE GENERATOR**
FLÜSSIGKEITSARBEITSMASCHINE UND WINDTURBINENGENERATOR
MACHINE DE TRAVAIL À FLUIDE ET GÉNÉRATRICE DE TURBINE ÉOLIENNE

(43) Date of publication of application: 11.06.2014
(73) Proprietor: Mitsubishi Heavy Industries, Ltd., Tokyo 108-8215 (JP)
(72) Inventor: NISHIDA, Hideaki, Tokyo 108-8215 (JP); OCHIAI, Hiroyasu, Tokyo 108-8215 (JP); UCHIDA, Michiya, Tokyo 108-8215 (JP); DODSON, Henry, Midlothian, Lothian EH20 9TB (GB)
(74) Representative: Intès, Didier Gérard André
(86) International application number: PCT/JP2012/004221
(87) International publication number: WO 2014/002143

(56) References cited:
- DE-A1- 19 816 452
- DE-A1- 19 832 696
- DE-A1-102010 032 058

## Description

### Technical Field

The present invention relates to a fluid working machine such as a hydraulic pump and a hydraulic motor, and also to a wind turbine generator using the fluid working machine.

### Background Art

In recent years, from a perspective of preserving the environment, it is becoming popular to use a power generating apparatus of renewable energy type such as a wind turbine generator utilizing wind power. In the wind turbine generator, kinetic energy of the wind is converted to rotational energy of the rotor and the rotational energy of the rotor is then converted into electric power by the generator.

In this type of wind turbine generator, a step-up gear was often used as a drive train. However, with increasing size of the wind turbine generator, a wind turbine generator equipped with a hydraulic transmission using a fluid working machine such as a hydraulic motor is becoming popular, offering reduced weight and cost thereof.

For instance, Patent Literature 1 discloses a hydraulic motor as the fluid working machine. This hydraulic motor converts a reciprocating motion of the piston in a cylinder into a rotating motion of a cam and outputs the rotating motion. The piston contacts the cam via a roller. Patent Literature 1 proposes to provide a groove in the contact surface between the roller and the cam to reduce wear on contact surfaces of the roller and the cam contacting each other. To the groove, the operating oil is supplied from the working chamber via an inner passage formed in the piston. The operating oil supplied to the groove leaks to the periphery to form a fluid film thereon. This works as a lubrication action.

In this type of fluid working machine, when being subjected to an oblique pressing force from the cam via the roller, the piston inclines with respect to a cylinder axis. This results in wear of the piston and the cylinder and piston seizing. Disclosed in Patent Literature 2 and Patent Literature 3, is a fluid working machine for preventing inclining of the piston by regulating a motion of the piston in the cylinder using a guide member provided in the piston.

In Patent Literature 2, the operating oil is supplied to an engagement surface of the piston engaging with the roller to form a lubricant film on the engagement surface, thereby reducing wear thereof. Disclosed in Patent Literature 3 is a fluid working machine having a roller holding part for holding a roller on a cam side of the piston, The piston holding part is formed with a diameter larger than a body portion reciprocating in the cylinder.

### [Citation List]

### [Patent Literature]

[PTL 1] US 5979295 B
[PTL 2] WO 2012/010261 A
[PTL 3] EP 524437 A

### [Summary]

### [Technical Problem]

In Patent Literature 2, to provide the guide member in the piston, a stepped portion is formed on an outer circumferential surface of the piston. The stepped portion is located inside the working chamber and thus interferes with the reciprocating motion of the piston in the cylinder. This may adversely affect operational efficiency of the fluid working machine.

The pressing force received from the cam via the roller causes the piston to reciprocate in the cylinder. In this process, the engagement surface of the piston against the roller is subjected to the pressing force from the cam. Thus, it is necessary for the piston to have enough durability to withstand the pressing from the roller. However, there is no measure taken regarding the durability of the piston in Patent Literature 1 or Patent Literature 2.

In Patent Literature 3, by forming the roller holding part with the diameter larger than the body portion, the piston is designed to withstand the pressing force from the cam. However, the body portion is approximately circular in cross section in a vertical plane of the cylinder axis, whereas the roller holding part is approximately oblong in cross-section in the vertical plane of the cylinder axis. It is technically difficult to form the piston by concentrically combining the body portion and the roller holding part that have different cross-sectional shapes.

At least one embodiment of the present invention is intended to provide a fluid working machine and a wind turbine generator by which an extended lifetime thereof is achieved while securing superior operational efficiency.

### [Solution to Problem]

According to embodiments, a fluid working machine comprises a rotation shaft, a cam rotating with the rotation shaft, at least one cylinder, at least one roller rotatably arranged so as to contact the cam, and at least one piston. The piston comprises a chamber forming part and a roller holding part. The chamber forming part forms a working chamber with an inner wall of the cylinder. The roller holding part for holding the roller is arranged between the chamber forming part and the cam, The roller holding part has a circular cross-sectional shape corresponding to that of the chamber forming part in a perpendicular plane of a center axis of the cylinder and is arranged concentrically with the chamber forming part. The piston is formed with a stepped portion between the roller holding part and the chamber forming part so that the roller holding part is formed with a larger diameter than the chamber forming part. The roller holding part holds the roller so that a rotational axis of the roller is parallel to a rotational axis of the cam. The chamber forming part has a piston ring groove which is formed on an outer periphery of the chamber forming part. In the piston ring groove, a piston ring is provided.

In the above fluid working machine, by forming the roller holding part with a larger diameter than the chamber forming part, it is possible to enhance the rigidity of the roller holding part holding the roller which moves in response to the rotation of the cam and thus, it is possible to improve the durability of the piston and also to lower the surface pressure between the roller and the piston. In contrast, the chamber forming part is formed with a smaller diameter than the roller holding part and thus, the freedom of arranging the component parts and the inner passages of the fluid working machine is improved. For instance, it is made easier to create a design with space around the working chamber to arrange the valve mechanism for supply and discharge of fluid to and from the working chamber.

The stepped portion is formed between the roller holding part and the chamber forming part. In other words, the piston has a step shape. Herein, the piston ring is provided for the purpose of suppressing leakage of the working fluid to and from the working chamber. The stepped portion is not disposed inside the working chamber and thus, is not subjected to the working fluid filling the working chamber. Therefore, the stepped portion does not interfere with the reciprocating motion of the piston in the cylinder. Further, on the roller side of the stepped portion, the piston in the cylinder is configured so that the operating oil flows in a path formed by the notched portion corresponding to the end of the roller, thereby avoiding the difficulty in streaming the operating oil between the piston and the cylinder. As a result, it is possible to achieve a superior operational efficiency of the machine.

As a result, superior operational efficiency of the fluid working machine is achieved and the lifetime is enhanced.

According to at least one embodiment, the chamber forming part comprises a body portion and a cover portion. The body portion is connected to the roller holding part via the stepped portion and the cover portion is disposed on the working chamber side of the body portion and forms the piston ring groove with the body portion.

In the above fluid working machine, the piston ring groove is formed with the body portion and the cover portion of the chamber forming part. Thus, in order to replace the piston ring fitted in the piston ring groove, the cover portion is removed from the body portion and the piston ring becomes easily accessible.

Further, the cover portion may be attached to the body portion and then be fixed to the body portion by bolts.

According to at least one embodiment, the piston further comprises an inner passage which communicates with the working chamber and which supplies working fluid in the working chamber to a space between the roller holding part and the roller. The inner passage comprises a first passage which is formed in the cover portion, and a second passage which is formed in the body portion to communicate with the first passage.

In the above fluid working machine, the operating oil is supplied to the engagement surface of the piston engaging with the roller, via the first and second passages formed in the chamber forming part and the roller holding part, respectively. The supplied working fluid forms a fluid film on the engagement surface and thus, wear on the piston and roller is reduced.

In at least one embodiment, the roller holding part is formed so that the roller holding part surrounds the roller and a width of the roller holding part along a center axis of the cylinder in a plane passing through the rotational axis of the roller and the center axis of the cylinder decreases toward the cam.

In the above fluid working machine, by forming the roller holding part as described above, the working fluid supplied to the engagement surface via the inner passage efficiently leaks downward from a gap between the roller holding part and the roller. In this manner, the following cycle is formed, that the working fluid is supplied to the engagement surface via the inner passage from the working chamber and then the working fluid having been used for lubricating the engagement surface is drained. As a result, it is possible to improve the lubrication effect on the engagement surface.

According to at least one embodiment, a position of the cover portion is regulated relative to the body portion in such a manner that a projection formed in one of the cover portion and the body portion is fitted in a recess formed in the other of the cover portion and the body portion.

In the above fluid working machine, by fitting the projection of the cover portion with the recess of the body portion, a relative position between the body portion and the cover portion is regulated. This facilitates a positioning operation performed by workers when assembling and disassembling the body portion and the cover portion during the maintenance and this also lightens the workload.

According to at least one embodiment, at least one of a surface of the roller or an engagement surface of the roller holding part engaging the roller is hardened.

In the above fluid working machine, at least one of the surface of the roller or the engagement surface of the roller holding part engaging the roller is hardened by hardening, for instance by carburizing, nitrocarburizing, induction-hardening or the like so that the surface of the roller had a hardness equal to or greater than the engagement surface of the roller holding part. As a result, it is possible to reduce the wear generated therein.

According to at least one embodiment, the roller holding part has a crowned outer periphery whose diameter is reduced with distance from the working chamber.

In the above fluid working machine, with the crowned outer periphery of the roller holding part, even when the pressing force from the ring cam causes the piston to incline, the risk of the outer periphery of the piston directly contacting the cylinder surface is reduced and the wear of the piston and the cylinder is reduced.

According to at least one embodiment, the piston further comprises an inner passage in which working fluid from the working chamber flows, and a groove is formed on an engagement surface of the roller holding part. The groove communicates with the inner passage so that the working fluid is introduced from the working chamber to the groove via the inner passage.

In the above fluid working machine, the engagement surface is a curved surface surrounding the roller along a circumferential direction of the roller, and the groove is formed at least in an area including a line of intersection between the engagement surface and a plane which is perpendicular to a center axis of the cylinder and includes a rotational axis of the roller. The operating oil in the groove leaks to the periphery from the groove by a fluid pressure of the working fluid itself. In this manner, the working fluid forms the fluid film over a large area of the engagement surface, thereby providing lubrication to the engagement surface.

According to at least one embodiment, the engagement surface is a curved surface surrounding the roller along a circumferential direction of the roller, and the groove is formed at least in an area including a line of intersection between the engagement surface and a plane which is perpendicular to a center axis of the cylinder and includes a rotational axis of the roller.

In this type of fluid working machine, the position on the engagement surface, which is subjected to the pressing force, changes cyclically as the cam rotates. A component of the pressing force acting on the engagement surface, which is perpendicular to the cylinder axis, increases with distance from the cylinder axis. More specifically, the pressing force acting in the area of the engagement surface far from the cylinder axis, significantly affects an inclination of the piston.

In the above fluid working machine, the groove is formed in the area of the engagement surface that is located away from the cylinder axis (in the area including the line of intersection between the engagement surface and the plane perpendicular to the center axis of the cylinder and including the rotational axis of the roller). Thus, lubrication is improved with respect to the large pressing force affecting the inclination of the piston significantly.

According to at least one embodiment, a plurality of the grooves is provided on the engagement surface, the piston further comprises a plurality of the inner passages corresponding to the plurality of the grooves, respectively, and the fluid is introduced from the working chamber to the plurality of the grooves via the plurality of inner passages, respectively.

As described above, the position on the engagement surface, which is subjected to the pressing force, changes along the rotation direction of the roller cyclically in response to the rotational phase of the cam. In the above fluid working machine, in accordance with the change in the position where the pressing force acts on the engagement surface, the grooves are formed on the engagement surface. Thus, the superior lubrication effect is achieved over a large area of the engagement surface.

Further, by providing the inner passages in the grooves respectively, the flows of the working fluid into the grooves are independently controlled. As a result, it is possible to regulate the flows of the working fluid independently so that enough working fluid is secured to achieve lubrication effect in each position of the engagement surface.

In such case, a flowability (impedance) of the working fluid in each of the inner passages can be adjusted appropriately in accordance with strength and direction of the pressing force on the engagement surface from the roller. Thus, it is possible to stabilize operations of the roller and the piston engaging with each other.

According to at least one embodiment, a plurality of the grooves is provided on the engagement surface, and the plurality of the grooves includes a first groove arranged on the engagement surface on an upstream side of a center axis of the cylinder in the rotation direction of the roller and a second groove arranged on the engagement surface on a downstream side of the center axis of the cylinder in the rotation direction of the roller.

The position on the engagement surface subjected to the pressing force changes cyclically between an upstream side and downstream side of the cylinder axis in the rotation direction of the roller in response to the rotational phase of the cam. In the above fluid working machine, by arranging the first groove and the second groove in the engagement surface on the upstream side and the downstream side in the rotation direction of the roller, respectively, the superior lubrication effect is achieved regardless of the rotational phase of the cam.

According to at least one embodiment, the piston further comprises an inner passage in which working fluid from the working chamber flows, and at least one groove is formed on an outer periphery of the roller holding part so that the working fluid is introduced via the inner passage from the working chamber to the at least one groove.

In the above fluid working machine, by providing the groove on the outer periphery of the roller holding part and supplying the working fluid from the working chamber to the groove, the fluid film is formed between the piston and the cylinder, thereby achieving the lubrication effect. As a result, even if the piston inclines in the cylinder, the wear of the piston and the cylinder is reduced and the lifetime thereof is enhanced.

According to at least one embodiment, the groove is formed at least in an area including a line of intersection between a plane perpendicular to a center axis of the cylinder and passing through a rotational axis of the roller and an outer periphery of the cylinder.

In the above fluid working machine, by forming the groove at least in the area including the line of intersection between the plane perpendicular to the center axis of the cylinder and passing through the rotational axis of the roller and the outer periphery of the cylinder (in the area where the pressing force of pressing the piston against the cylinder becomes maximum), the wear of the piston and the cylinder is effectively reduced.

According to at least one embodiment, a pad member is formed by the groove and a land surrounded by the groove on the outer periphery of the roller holding part.

In the above fluid working machine, the pad member is formed by the groove and the land surrounded by the groove and thus, the supplied working fluid positively forms a fluid film on the land. Thus, a superior lubrication effect is achieved.

In at least one embodiment, the groove may be formed by at least one groove portion extending perpendicular to the center axis of the cylinder on the outer periphery of the roller holding part. By changing the geometry of the groove in this manner, the flow of the working fluid supplied to the groove from the working chamber may be adjusted.

According to embodiments, a wind turbine generator comprises at least one hub on which the blade is mounted, a main shaft connected to the hub, at least one hydraulic pump attached to the main shaft, at least one hydraulic motor driven by pressurized oil supplied from the hydraulic pump, and a generator coupled to the hydraulic motor and driven by rotation of the main shaft upon receiving wind on the blade. The fluid working machine described above comprises at least one of the hydraulic pump or the hydraulic motor.

The above fluid working machine is applicable to a wind turbine generator which generates power from wind as a form of renewable energy.

### Advantageous Effects of Invention

In the above fluid working machine, by forming the roller holding part with a larger diameter than the chamber forming part, it is possible to enhance the rigidity of the roller holding part holding the roller which moves in response to the rotation of the cam and thus, the durability of the piston is improved.

In contrast, the chamber forming part is formed with a smaller diameter than the roller holding part and thus, the freedom of arranging the component parts and the inner passages of the fluid working machine is improved. For instance, it is made easier to create a design with space around the working chamber to arrange the valve mechanism for supplying and discharging the fluid to the working chamber.

The stepped portion is formed between the roller holding part and the chamber forming part. Herein, the piston ring is provided for the purpose of suppressing leaking of the working fluid in the working chamber and the piston ring is provided in the piston ring groove formed in the outer periphery of the chamber forming part on the side nearer to the chamber than the stepped portion. Thus, the stepped portion is not disposed inside the working chamber and thus, is not subjected to the working fluid filling the working chamber. Therefore, the stepped portion does not interfere the reciprocating motion of the piston in the cylinder, thereby achieving a superior operational efficiency of the machine.

As a result, in the fluid working machine, a superior operational efficiency is achieved and the lifetime is enhanced.

### [Brief Description of Drawings]

[Fig. 1] Fig. 1 is a schematic view of an overall structure of a wind turbine generator.
[Fig. 2] Fig. 2 shows an inner structure of a hydraulic motor
[Fig. 3] Fig.3 is an outline drawing of a piston.
[Fig. 4A] Fig. 4A is a top view of the piston shown in Fig.3, taken from the outside in a radial direction of a ring cam.
[Fig. 4B] Fig. 4B is a cross-sectional view taken by line A-A of Fig.4A.
[Fig. 4C] Fig. 4C is a bottom view of the piston shown in Fig.3, taken from the inside in the radial direction of the ring cam.
[Fig. 5A] Fig. 5A is a top view of a body portion from the outside in the radial direction of the ring cam.
[Fig. 5B] Fig. 5B is a cross-sectional view taken by line B-B of Fig.5A.
[Fig. 6A] Fig. 6A is a top view of a cover portion from the outside in the radial direction of the ring cam.
[Fig. 6B] Fig. 6B is a cross-sectional view taken by line C-C of Fig.6A.
[Fig. 7] Fig. 7 is a cross-sectional view of the piston and a roller, schematically showing mechanism for generating a hydrostatic oil pressure on an engagement surface.
[Fig. 8] Fig. 8 is an illustration of a modified example of grooves formed on the engagement surface.
[fig.9]Fig. 9 is a side view of the piston.
[fig.10]Fig.10 is a modified example of Fig.9.

### Description of Embodiments

At least one embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

In following embodiments, a wind turbine generator is described as one example of a power generating apparatus of renewable energy type. However, this is not limitative and the present invention is applicable to other types of power generating apparatus of renewable energy type such as a tidal generator, an ocean current generator and a river current generator.

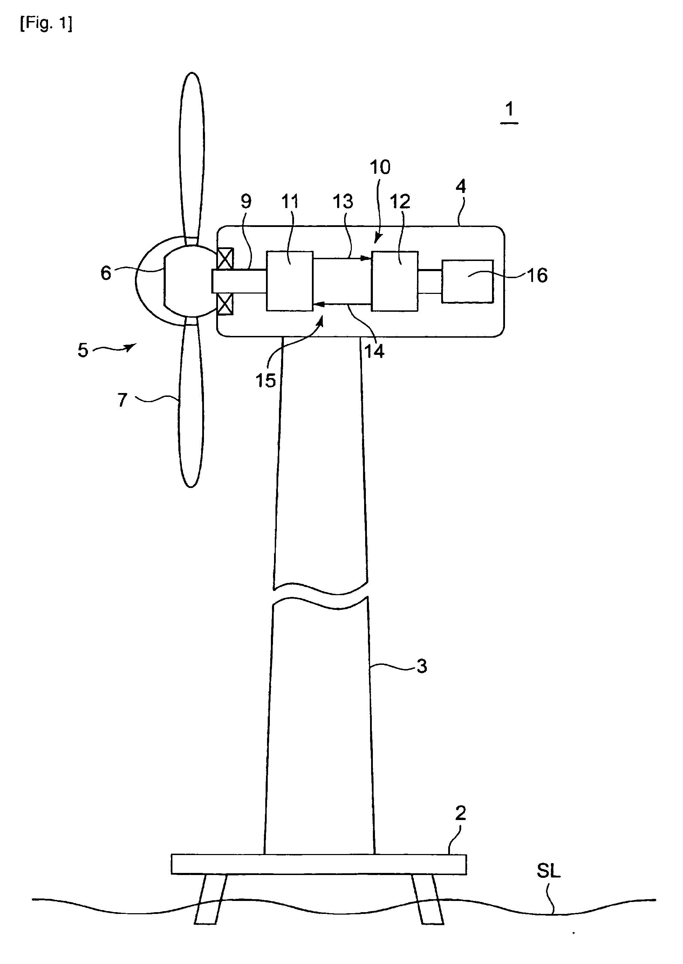

Fig. 1 is a schematic view of an overall structure of a wind turbine generator. The wind turbine generator 1 is mainly provided with a tower 3 installed on a foundation 2, a nacelle 4 supported by the tower 3 and a rotor 5 rotating by wind energy.

Fig. 1 shows an exemplary case where the wind turbine generator 1 is installed on a sea level as an offshore wind turbine generator. However, the wind turbine generator 1 is also installable on shore.

The rotor 5 is formed with at least one blade 7 (for instance, three blades) and a hub 6 supporting the blade 7. The hub 6 is connected to a rotation shaft 9 housed in the nacelle 4. As a result, the rotor 5 rotates upon receiving wind on the blade 7, thereby rotating the rotation shaft 9 connected to the hub 6.

The nacelle 4 houses a hydraulic transmission 10 and a generator 16. The hydraulic transmission 10 includes a hydraulic pump 11 connected to the rotation shaft 9, at least one hydraulic motor 12 connected to the generator 16, and an oil line 15 provided between the hydraulic pump 11 and the hydraulic motor 12. The oil line 15 is formed by a high pressure oil line 13 for connecting a discharge side of the hydraulic pump 11 to an intake side of the hydraulic motor 12, and a low pressure oil line 14 for connecting a discharge side of the hydraulic motor 12 to an intake side of the hydraulic pump 11.

The hydraulic pump 11 is driven by the rotation shaft 9 to generate operating oil of high pressure. This operating oil of high pressure is supplied to the hydraulic motor 12 via the high pressure oil line 13 to drive the hydraulic motor 12 by the operating oil of high pressure. Meanwhile, the generator 16 connected to the hydraulic motor 12 is driven to generate electric power. The operating oil discharged from the hydraulic motor 12 is supplied to the hydraulic pump 11 via the low pressure oil line 14 to pressurize the operating oil again in the hydraulic pump 11 and then the operating oil having been pressurized is supplied to the hydraulic motor 12.

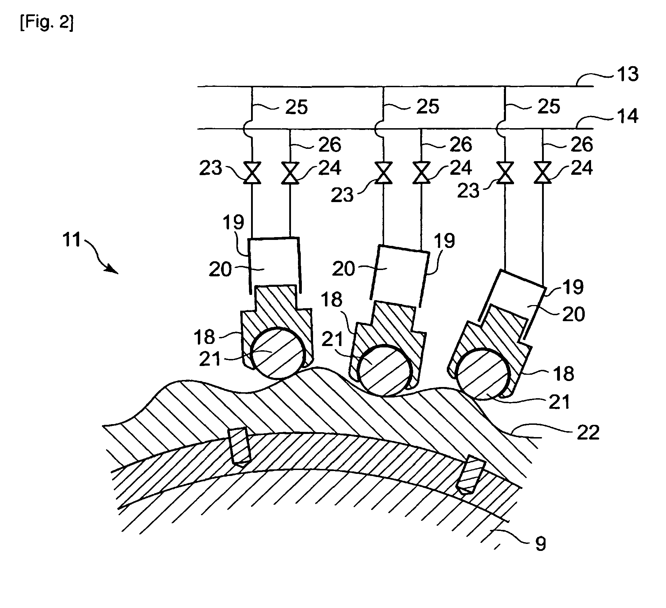

Fig.2 shows an inner structure of the hydraulic pump 11. In the following descriptions, the hydraulic motor 12 is described as one example of the fluid working machine. However, this is not limitative and the structure is also applicable to hydraulic motor 12.

The hydraulic pump 11 is provided with a plurality of working chambers 20 formed by pistons 18 and cylinders 19, a plurality of rollers 21 engaged rotatably with the pistons 18, and a ring cam 22 contacting the rollers 21 and rotating with the rotation shaft 9. In each of the working chambers 20, a high pressure valve 23 and a low pressure valve are provided. The high pressure valve 23 is arranged in a high pressure communication path 25 between each working chamber 20 and the high pressure oil line 13. The low pressure valve 24 is arranged in a low pressure communication path 26 between each working chamber 20 and the low pressure oil line 14. Herein, a check valve for allowing the operating oil flowing toward a high pressure oil line 13 from the working chamber 20 is used for the high pressure valve 23, and an electromagnetic valve is used for the low pressure valve 24.

During operation of the hydraulic pump 11, the rotation of the ring cam 22 with the rotation shaft 9 causes the piston 18 to move up and down (reciprocating motion) in synchronization with the cam profile, repeating a pump stroke where the piston 18 moves from a bottom dead center to a top dead center and an intake stroke where the piston 18 moves from the top dead center toward the bottom dead center. Thus, a volume of the working chamber 20 changes cyclically.

In the hydraulic pump 11, each working chamber 20 is switchable between an active state and an idle state by controlling opening and closing of the high pressure valve 23 and the low pressure valve 24. With the working chamber 20 in the active state, by closing the high pressure valve 23 and opening the low pressure valve 24 during the intake stroke, the operating oil is introduced to the working chamber 20 from the low pressure oil line 14. Further, by opening the high pressure valve 23 and closing the low pressure valve 24 during the pump stroke, the operating oil pressurized therein is supplied from the working chamber 20 to the high pressure oil line 13. In contrast, with the working chamber 20 in the idle state, by keeping the high pressure valve 23 closed and the low pressure valve 24 open during both the intake stroke and the pump stroke, the operating oil flows back and forth between the working chamber 20 and the low pressure oil line 14. In other words, the operating oil is not fed to the high pressure oil line 13.

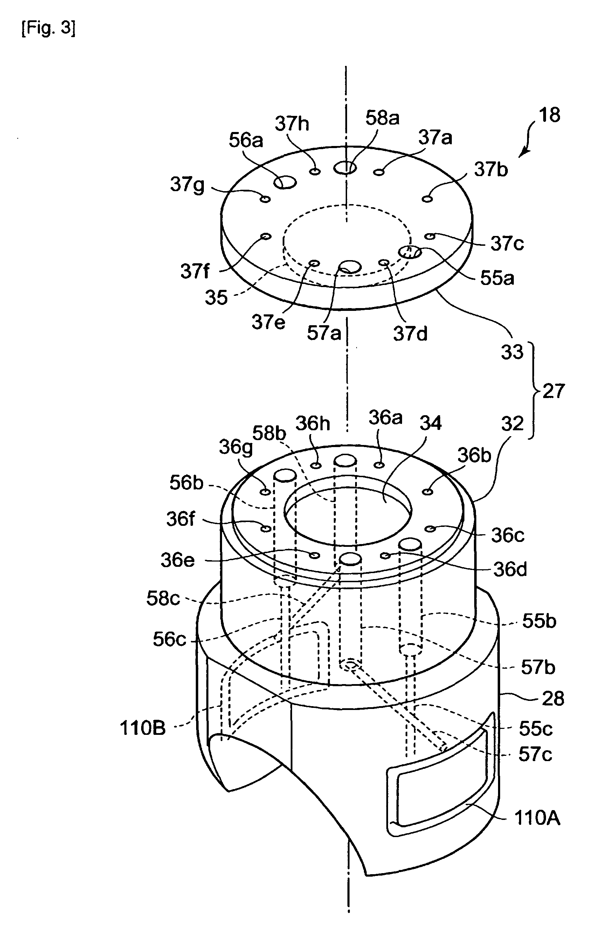

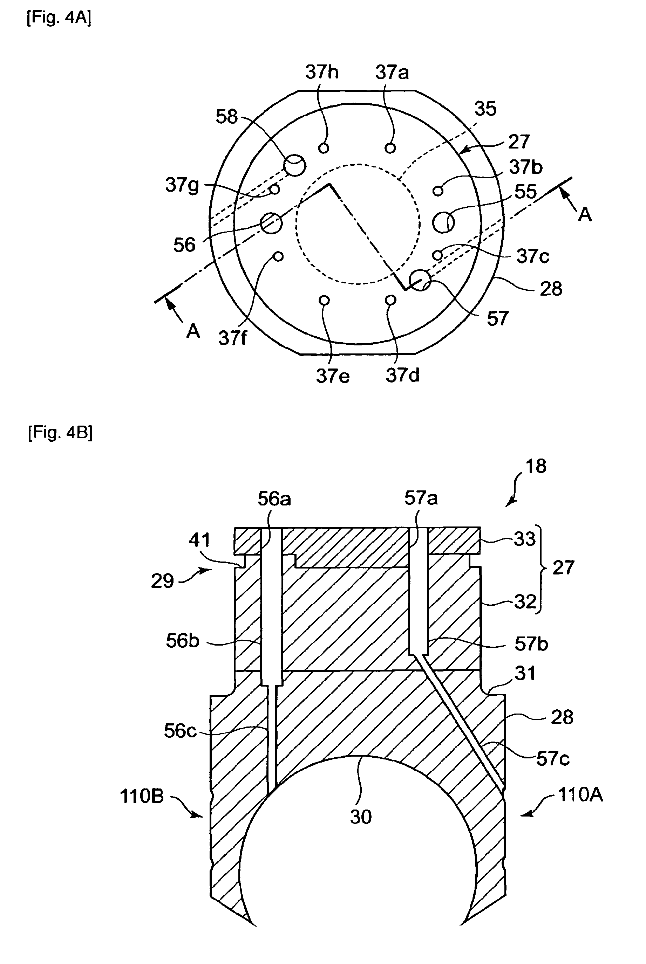

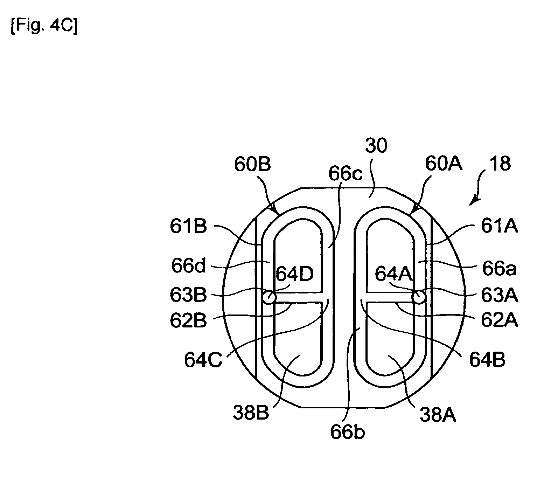

Fig.3 is an outline drawing of the piston 18. Fig. 4A is a top view of the piston 18 shown in Fig.3, taken from the outside in a radial direction of a ring cam 22. Fig. 4B is a cross-sectional view taken by line A-A of Fig.4A. Fig. 4C is a bottom view of the piston 18 shown in Fig.3, taken from the inside in the radial direction of the ring cam 22.

The piston 18 is configured with a chamber forming part 27 and a roller holding part 28. The chamber forming part 27 forms the working chamber 20 with the cylinder 19. The roller holding part 28 holds the roller 21 rotatably and has an engagement surface 30 engaging with the roller 21. The engagement surface 30 is formed into a curved surface having approximately the same as or slightly larger curvature than the roller 21 so as to surround the roller in the circumferential direction.

A piston ring groove 29 is formed on an outer periphery of the chamber forming part 27. In the piston ring groove, a piston ring not shown is fitted. The piston ring is, for instance, provided for the purpose of suppressing leakage of operating oil from or into the working chamber 20.

Upon receiving a pressing force from the ring cam 22 via the roller 21, the piston ring 18 reciprocates in the cylinder 19. In this process, the roller holding part 28 of the piston 18 contacts the rolling roller and is subjected to the pressing force. Thus, the piston ring 18 is desired to have enough durability to withstand the pressing force. In the embodiment, the roller holding part 28 is formed with a larger diameter than the chamber forming part 27 so as to enhance rigidity thereof. As a result, it is possible to attain enough durability.

In contrast, the chamber forming part 27 is formed with a smaller diameter than the roller holding part 28. By forming the chamber forming part 27 with a smaller diameter as described above, it is easier to create a design with space around the working chamber 20 for arranging other parts of the fluid working machine and an inner passage. The other parts of the fluid working machine include a valve mechanism used to supply and discharge the fluid to and from the working chamber 20 or the like. The inner passage includes passages for supplying and discharging the fluid to and from the working chamber.

In this manner, the piston is formed by a combination of the chamber forming part 27 and the roller holding part 28 which have different diameters. Thus, a stepped portion 31 is formed between the chamber forming part 27 and the roller holding part 28. The stepped portion 31 is round-chamfered.

As described above, the piston ring to be fitted in the piston ring groove 29 is, for instance, provided for the purpose of suppressing leaking of the operating oil to and from the working chamber. In the embodiment, the piston ring groove 29 is provided on a side of the piston 18 closer to the working chamber 20 than the stepped portion 31. The stepped portion 31 is not disposed inside the working chamber and thus, is not subjected to the operating oil filling the working chamber 20. Therefore, the stepped portion 31 does not interfere with the reciprocating motion of the piston 18 in the cylinder, thereby achieving a superior operational efficiency of the machine.

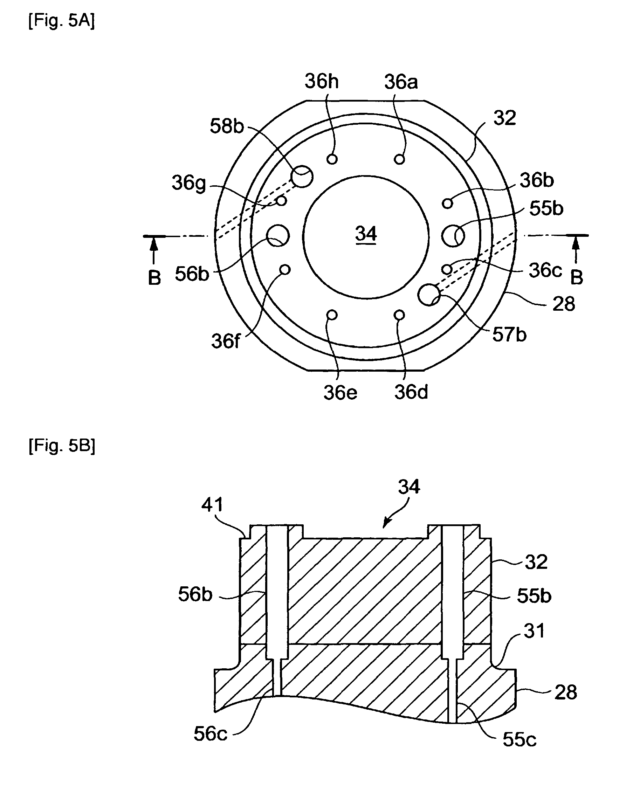

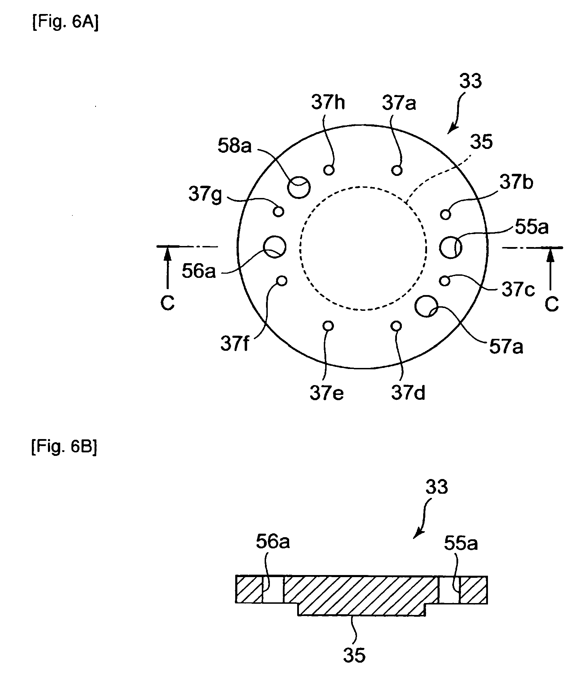

The chamber forming part 27 of the piston 18 is configured to include a body portion 32 and a cover portion 33. Fig. 5A is a top view of the body portion 32 from the outside in the radial direction of the ring cam 22. Fig. 5B is a cross-sectional view taken by line B-B of Fig.5A. Fig. 6A is a top view of the cover portion 33 from the outside in the radial direction of the ring cam 22. Fig. 6B is a cross-sectional view taken by line C-C of Fig.6A.

The body portion 32 has a cylindrical shape and is connected to the roller holding part 28 via the stepped portion 31. The cover portion 33 forms a part of the working chamber 20 and is attached to the body portion 32 from the working chamber side. The body portion 32 has a recess 34 formed on a side facing the cover portion 33 and, the cover portion has a projection 35 corresponding to the recess 34. The body portion 32 and the cover portion have bolt holes 36a to 36h and 37a to 37h, respectively, formed along the circumferential direction so that bolts not shown is insertable therein.

By fitting the projection 35 in the recess 34, a relative position between the body portion 32 and the cover portion 33 is regulated. This facilitates a positioning operation performed by workers when assembling and disassembling the body portion 32 and the cover portion 33 during the maintenance and this also lightens the workload.

Further, by fastening bolts in the bolt holes 36a to 36h and 37a to 37h, the cover portion 33 is fixed with respect to the body portion 32. As a result, even in the case where the chamber forming part 27 is constituted of a combination of separate parts, i.e. the body portion 32 and the cover portion 33, it is possible to prevent the parts being displaced from each other in the cylinder 19.

Further, the body portion 32 and the roller holding part 28 may be formed separately or integrally.

The piston ring groove 29 is formed by the body portion 32 and the cover portion 33 combined in the above fashion. In this embodiment, a notched portion 41 is formed on an outer edge of the body portion 32 on the working chamber side. When combined with the cover portion 33, the notched portion 41 of the body portion 32 integrally with the surface of the cover portion 33 forms the piston ring groove 29. With the above configuration of the piston ring groove 29, in order to replace the piston ring fitted in the piston ring groove 29, the cover portion 33 is removed from the body portion 32 for easy access to the piston ring. As a result, it is possible to reduce the workload.

Alternatively, a radially outer edge of the cover portion 33 may be notched on the inner side facing in the radial direction towards the ring cam 22 to form a notched portion. The notched portion of the cover portion 33 and the outer surface of the body portion 32 in the radial direction facing away from the ring cam 22 may be combined to form the piston ring groove 29. Alternatively, the circumferential outer edge of the body portion 32 on the outer side facing in the radial direction away from the ring cam 22. The circumferential outer edge of the cover portion 33 on the inner side facing in the radial direction towards the ring cam 22 may be notched, respectively, and the piston ring groove 29 may be formed by combining the notched portions.

Inner passages 55 to 58 are formed in the piston 18 in which the operating oil flows from the working chamber 22. More specifically in the chamber forming part, the inner passages 55a to 58a are formed in the cover portion 33, the inner passages 55b to 58b are formed in the body portion 32, and the inner passages 55c to 58c are formed in the roller holding part 28. These sections a, b, and c of the inner passages communicate with corresponding inner passages inside the piston 18, thereby forming the complete inner passages 55 to 58.

Further, an orifice may be provided in each of the inner passages 55 to 58 to regulate the flow of the operation oil supplied from the working chamber 20.

The inner passages 55 and 56 communicate with the grooves 60A and 60B, respectively, formed on the engagement surface 30. As shown in Fig.4C, the grooves 60A and 60B include annular groove portions 61A and 61B and communication groove portions 62A and 62B formed along the rotational direction of the roller 21 to traverse the annular groove portions 61A and 61B, respectively. The inner passages 55 and 56 communicate with supply openings 63A and 63B formed either in the communication groove portions 62A and 62B respectively, or anywhere in either of the groove portions 61A and 61B respectively, or anywhere in either of the merging sections 64B and 64C respectively.

The operation oil is supplied to the communication groove portions 62A and 62B of the grooves 60A and 60B via the inner passages 55 and 56, respectively. The communication groove portions 62A and 62B are formed to traverse the annular prove portions 61A and 61B, respectively, along the rotational direction of the roller 21. Thus, the communication groove portions 62A and 62B include a plurality of merging sections 64A to 64D. Therefore, the operating oil supplied from the inner passages 55 and 56 is introduced to different places of the annular groove portions 61A and 61B via the communication groove portions 62A and 62B, respectively.

Upon rotation of the roller 21, the operating oil inside the grooves 60A and 60B is drawn to the engagement surface 30 to generate a hydrostatic oil pressure there. This hydrostatic oil pressure supports the large load applied to the roller 21 from the cam 22. Then, for the amount of the operating oil drawn to the engagement surface 30 from the grooves 60A and 60B, the grooves 60A and 60B are refilled so as to always generate the hydrostatic oil pressure.

By introducing the operating oil supplied from the inner passage 55, 56 to the different places of the annular groove portion 61A, 61B via the communication groove portion 62A, 62B and by effectively spreading the operating oil throughout the groove 60A, 60B, it is possible to replenish the operating oil to the groove 60A, 60B effectively and also to generate the hydrostatic oil pressure.

As described above, the operating oil is drawn from the groove 60A, 60B to the engagement surface 30 by the rotation of the roller 21 so as to form the fluid film which creates the hydrostatic oil pressure. As the grooves 60A and 60B include the annular groove portions 61A and 61B and thus, each include a plurality of groove sections extending in a direction transverse to the rotation direction of the roller 21 (see Fig.4C, 66a to 66d). From these grooves, the operating oil is introduced onto the engagement surface 30 by the rotation of the roller 21, thereby creating the hydrostatic oil pressure on the engagement surface 30.

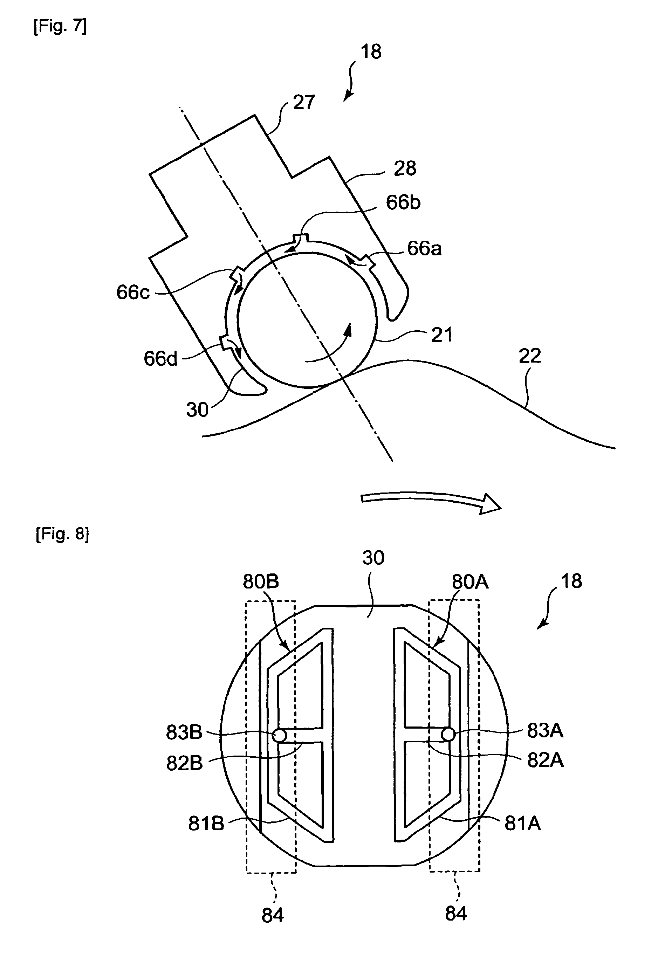

Fig. 7 is a cross-sectional view of the piston 18 and the roller 21, schematically showing a mechanism for generating the hydrostatic oil pressure on the engagement surface 30.

When the ring cam 22 rotates in the direction of the arrow, the roller 21 rotates in the opposite direction. On the engagement surface 30 of the piston 18, the grooves 60A and 60B are filled with the operating oil are formed. In Fig.7 the groove sections 66a to 66d are disposed perpendicular to the rotation direction of the roller. Operating oil filling the groove sections 66a to 66d has viscosity, and thus is drawn onto the engagement surface 30 toward a downstream side (see the arrow in Fig.7) in the rotation direction of the roller 2 in response to the rotation of the roller 21. As a result, a fluid film is formed on the engagement surface 30 and thus, it is possible to obtain the hydrostatic oil pressure.

According to this embodiment, the operating oil is effectively introduced to the entire grooves 60A and 60B formed on the engagement surface 30 and the hydrostatic oil pressure is generated thereon. As a result, the wear in the engagement surface 30 is reduced and the lifetime is enhanced.

Fig. 8 is an illustration of a modified example of the grooves 60A and 60B formed on the engagement surface 30. In a fashion similar to Fig.4C, two grooves 80A and 80B are formed on the engagement surface 30 as shown in Fig.8. The grooves 80A and 80B include annular groove portions 81A and 81B and communication groove portions 82A and 82B formed along the rotational direction of the roller 21 to traverse the annular groove portions 81A and 81B, respectively. The inner passages 55 and 56 communicate with supply openings 83A and 83B formed in the communication groove portions 82A and 82B, respectively, or anywhere in either of the groove portions 81A and 81B respectively, or anywhere in either of the merging sections 82B and 82A respectively.

In this example, the grooves 80A and 80B are formed farther from the cylinder axis than the grooves 60A and 60B shown in Fig.4C and are formed at least in an area including a line of intersection between the engagement surface 30 and a plane per-pendicular to the center axis of the cylinder 19 and including the rotational axis of the roller 21.

The position on the engagement surface 30, which is subjected to the pressing force changes along the rotation direction of the roller 21 cyclically in response to the rotational phase of the ring cam 22. A component of the pressing force acting on the engagement surface 30, which is perpendicular to the cylinder axis, increases with distance from the cylinder axis. More specifically, the pressing force acting in the area of the engagement surface 30 far from the cylinder axis, significantly affects an inclination of the piston 18.

In the example of Fig.8, the grooves 80A and 80B are formed in the areas 84 of the engagement surface 30 that are located away from the cylinder axis (in the area including the line of intersection between the engagement surface 30 and the plane perpendicular to the center axis of the cylinder 19 and including the rotational axis of the roller 21). Thus, it is possible to improve a lubrication effect with respect to the large pressing force affecting the inclination of the piston 18 significantly.

As shown in Fig.3 and Fig.4, the inner passages 57 and 58 formed in the piston 18 communicate with outer grooves 110A and 110B formed in the outer periphery of the roller holding part 28. The inner passages 57 and 58 extend in the direction parallel to the cylinder axis inside the cylinder forming part 27, and may extend diagonally to the cylinder axis so as to communicate with the outer grooves 110A and 110B.

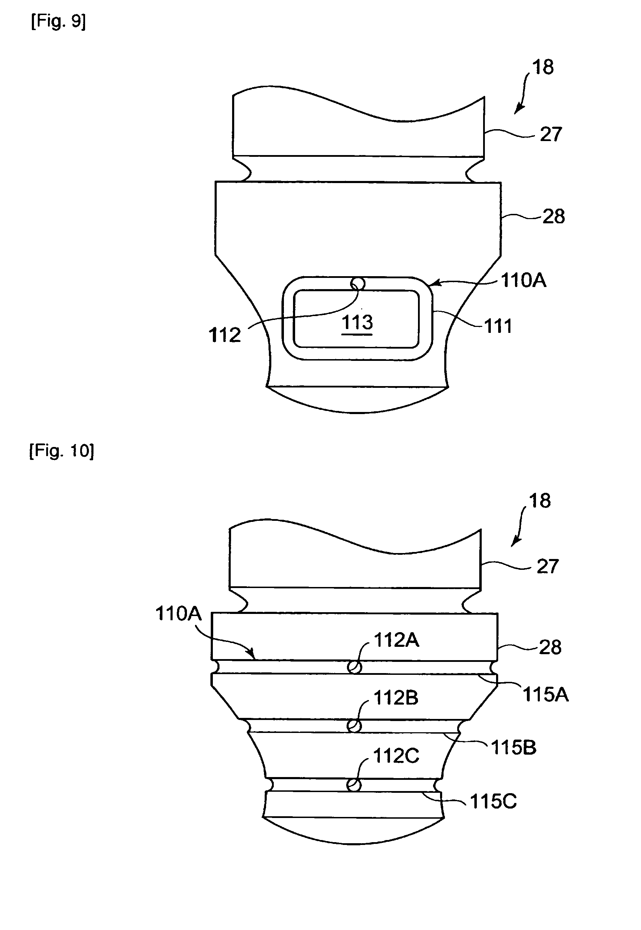

Fig. 9 is a side view of the piston 18. Fig.9 shows only one side of the piston 18 on which the outer groove 110A is provided but obviously, the other side of the piston 18 on which the outer groove 110B is provided has the same configuration.

The outer groove 110A includes an annular groove portion 111 formed on the outer periphery of the piston 18 and a supply opening 112 formed in the annular groove portion 111. The supply opening 112 communicates with the inner passage 57 so that the operating oil is supplied from the working chamber 20 to the annular groove portion 111. In response to the reciprocating motion of the piston 18 in the cylinder 19, the operating oil supplied to the annular groove portion 11 is drawn into a space between the piston 18 and the cylinder 19 from the annular groove portion 11, thereby generating the hydrostatic oil pressure. This counteracts the load acting between the piston 18 and the cylinder 19, thereby reducing wear of the piston 18 and the cylinder 19.

The outer groove 110A includes a land 113 surrounded by the annular groove portion 111. The land 113 is surrounded by the annular groove portion 111 filled with the operating oil and thus, the operating oil is easily drawn from the annular groove portion 111 to the surface by the rotation of the roller 21, thereby generating the hydrostatic oil pressure. In this manner, the outer groove 110A is formed as a pad member including the annular groove portion 111 and the land 113 and thus, it is possible to generate the hydrostatic oil pressure effectively.

The outer grooves 110A and 110B are formed at least in the areas including the line of intersection between the plane perpendicular to the center axis of the cylinder 19 and passing through the rotational axis of the roller 21 and the outer periphery of the cylinder 19. These are the areas where the piston 18 is pressed strongly against the cylinder 19. Thus, by providing the outer grooves 110A and 110B in these areas, it is possible to reduce the wear of the piston 18 and the cylinder 19 effectively.

The surface of the roller 21 is hardened for instance by carburizing so that the surface is harder than the engagement surface 30. Thus, it is possible to reduce wear of the engagement surface.

In this embodiment, only the roller 21 is hardened. However, this is not limitative as long as at least one of the roller 21 and the piston 18 is hardened. More specifically, only the piston 18 may be hardened or both the roller 21 and the piston 18 may be hardened.

Further, the roller holding part 28 has a crowned outer periphery whose diameter is reduced with distance from the working chamber 20. In the space between the piston 18 and the cylinder 19, a hydrodynamic oil pressure is generated by the operating oil leaking to/from the working chamber 20 in combination with the movement of the operating oil caused by the reciprocating motion of the piston 18 in the cylinder 19, thereby forming a fluid film. In this embodiment, by crowning the outer periphery of the roller holding part 28, even when the pressing force from the ring cam 22 causes the piston 18 to incline, it is possible to effectively generate a hydrodynamic oil pressure on the outer periphery of the piston 18, thereby preventing the outer periphery of the piston 18 from directly contacting the cylinder surface. As a result, it is possible to reduce wear on the piston and the cylinder.

Fig.10 is a modified example of Fig.9. In the exemplary case of Fig.9, the outer grooves 110A and 110B are formed on the outer periphery of the piston 18 as pads. However, as shown in the exemplary case of Fig.10, the outer groove 110A may be formed by three groove portions 115A, 115B, 115C extending parallel to each other in the direction perpendicular to the cylinder axis (the outer groove 110 B may be formed in the same manner). The groove portions 115A, 115B, 115C have openings 112A, 112B, 112C respectively with which the inner passages 55, 56 communicate. The operating oil is introduced from the working chamber 20 via the openings 112A, 112B, 112C. By changing the geometry of the outer grooves 110A, 110B in this manner, the flow of the working fluid supplied to the outer groove 110A, 110B may be adjusted.

While the present invention has been described with reference to exemplary embodiments, it is obvious to those skilled in the art that various changes may be made without departing from the scope of the invention.

### Reference Signs List

- 1: Wind turbine generator
- 2: Foundation
- 3: Tower
- 4: Nacelle
- 5: Rotor
- 6: Hub
- 7: Blade
- 9: Rotation shaft
- 10: Hydraulic transmission
- 11: Hydraulic pump
- 12: Hydraulic motor
- 13: High pressure oil line
- 14: Low pressure oil line
- 15: Oil line
- 16: Generator
- 18: Piston
- 19: Cylinder
- 20: Working chamber
- 21: Roller
- 22: Ring cam
- 23: High pressure valve
- 24: Low pressure valve
- 25: High pressure communication path
- 26: Low pressure communication path
- 27: Chamber forming part
- 28: Roller holding part
- 29: Piston ring groove
- 30: Engagement surface
- 31: Stepped portion
- 32: Body portion
- 33: Cover portion
- 34: Recess
- 35: Projection
- 36, 37: Bolt hole
- 40: Opening
- 41: Notched portion
- 55 to 58: Inner passage
- 60: Groove
- 61: Annular groove portion
- 62: Communication groove portion
- 63: Supply opening
- 64: Merging section
- 110: Outer groove
- 111: Annular groove portion

## Claims

1. A fluid working machine comprising:
a rotation shaft (9);
a cam (22) which rotates with the rotation shaft;
at least one cylinder (19);
at least one roller (21) which is rotatably arranged so as to contact the cam; and
at least one piston (18) which comprises a chamber forming part (27) which forms a working chamber (20) with an inner wall of the cylinder, and a roller holding part (28) which is arranged between the chamber forming part and the cam and which holds the roller, the roller holding part having a circular cross-sectional shape corresponding to that of the chamber forming part in a perpendicular plane of a center axis of the cylinder and being arranged concentrically with the chamber forming part, the fluid working machine being **characterised in that**
the piston is formed with a stepped portion (31) between the roller holding part (28) and the chamber forming part (27) so that the roller holding part is formed with a larger diameter than the chamber forming part,
the roller holding part (28) holds the roller so that a rotational axis of the roller is parallel to a rotational axis of the cam,
the chamber forming part (27) has a piston ring groove (29) which is formed on an outer periphery of the chamber forming part on a working chamber side of the stepped portion (31), and
, in the piston ring groove, a piston ring is provided.

2. The fluid working machine according to claim 1,
wherein the chamber forming part (27) comprises:
a body portion (32) which is connected to the roller holding part (28) via the stepped portion (31); and
a cover portion (33) which is disposed on the working chamber side of the body portion and forms the piston ring groove with the body portion.

3. The fluid working machine according to claim 1,
wherein the piston (18) further comprises an inner passage (55-58) which communicates with the working chamber (20) and which supplies working fluid in the working chamber to a space between the roller holding part and the roller, and
wherein the inner passage comprises a first passage (55a-58a) which is formed in the cover portion (33), and a second passage (55b-58b) which is formed in the body portion (32) to communicate with the first passage.

4. The fluid working machine according to claim 3,
wherein the roller holding part (28) is formed so that the roller holding part surrounds the roller (21) and a width of the roller holding part along a center axis of the cylinder in a plane passing through the rotational axis of the roller and the center axis of the cylinder decreases toward the cam (22).

5. The fluid working machine according to claim 2,
wherein a position of the cover portion (33) is regulated relative to the body portion (32) in such a manner that a projection (35) formed in one of the cover portion and the body portion is fitted in a recess (34) formed in the other of the cover portion and the body portion.

6. The fluid working machine according to claim 1,
wherein at least one of a surface of the roller (21) or an engagement surface (30) of the roller holding part (28) engaging with the roller is hardened.

7. The fluid working machine according to claim 1,
wherein the roller holding part (28) has a crowned outer periphery whose diameter is reduced with distance from the working chamber (20).

8. The fluid working machine according to claim 1,
wherein the piston (18) further comprises an inner passage (55-58) in which working fluid from the working chamber flows (20), and
wherein a groove (60A,60B;80A;80B) is formed on an engagement surface (30) of the roller holding part (28), the groove communicating with the inner passage so that the working fluid is introduced from the working chamber to the groove via the inner passage.

9. The fluid working machine according to claim 7,
wherein the engagement surface (30) is a curved surface surrounding the roller (21) along a circumferential direction of the roller, and
wherein the groove (80A,80B) is formed at least in an area including a line of intersection between the engagement surface and a plane which is perpendicular to a center axis of the cylinder and includes a rotational axis of the roller.

10. The fluid working machine according to claim 8,
wherein a plurality of the grooves (60A,60B;80A;80B) is provided on the engagement surface (30),
wherein the piston (18) comprises a plurality of the inner passages (55-58) corresponding to the plurality of the grooves, respectively, and
wherein the fluid is introduced from the working chamber (20) to the plurality of the grooves via the plurality of inner passages, respectively.

11. The fluid working machine according to claim 8,
wherein a plurality of the grooves (60A,60B;80A,80B) is provided on the engagement surface (30), and
wherein the plurality of the grooves includes a first groove arranged on the engagement surface on an upstream side of a center axis of the cylinder in the rotation direction of the roller and a second groove arranged on the engagement surface on a downstream side of the center axis of the cylinder in the rotation direction of the roller.

12. The fluid working machine according to claim 1,
wherein the piston further comprises an inner passage (55-58) in which working fluid from the working chamber flows, and
wherein at least one groove (110A,110B) is formed on an outer periphery of the roller holding part so that the working fluid is introduced via the inner passage from the working chamber to the at least one groove.

13. The fluid working machine according to claim 12,
wherein the groove (110A,110B) is formed at least in an area including a line of intersection between a plane perpendicular to a center axis of the cylinder and passing through a rotational axis of the roller and an outer periphery of the cylinder.

14. The fluid working machine according to claim 12,
wherein a pad member (110A) is formed by the groove and a land (113) surrounded by the groove on the outer periphery of the roller holding part.

15. The fluid working machine according to claim 12,
wherein the groove (110A) is formed by at least one groove portion extending perpendicular to the center axis of the cylinder on the outer periphery of the roller holding part.

16. A wind turbine generator comprising:
at least one hub (6) on which the blade (7) is mounted;
a main shaft (9) which is connected to the hub;
at least one hydraulic pump (11) which is attached to the main shaft;
at least one hydraulic motor (12) which is driven by pressurized oil supplied from the hydraulic pump; and
a generator (16) which is coupled to the hydraulic motor and which is driven by rotation of the main shaft upon receiving wind on the blade,
wherein at least one of the hydraulic pump (11) and the hydraulic generator (16) is the fluid working machine of claim 1.

## Patentansprüche

1. Fluidarbeitsmaschine, umfassend:
eine Drehwelle (9),
einen Nocken (22), der sich mit der Drehwelle dreht,
mindestens einen Zylinder (19),
mindestens eine Rolle (21), die derart drehbar angeordnet ist, dass sie den Nocken berührt, und
mindestens einen Kolben (18), der einen kammerbildenden Teil (27), welcher mit einer Innenwand des Zylinders eine Arbeitskammer (20) bildet, und einen Rollenhalteteil (28), welcher zwischen dem kammerbildenden Teil und dem Nocken angeordnet ist und welcher die Rolle hält, umfasst, wobei der Rollenhalteteil eine kreisförmige Querschnittsform aufweist, die jener des kammerbildenden Teils in einer senkrechten Ebene einer Mittelachse des Zylinders entspricht, und konzentrisch mit dem kammerbildenden Teil angeordnet ist, wobei die Fluidarbeitsmaschine **dadurch gekennzeichnet ist, dass**
der Kolben zwischen dem Rollenhalteteil (28) und dem kammerbildenden Teil (27) mit einem gestuften Abschnitt (31) derart ausgebildet ist, dass der Rollenhalteteil mit einem größeren Durchmesser als der kammerbildende Teil ausgebildet ist,
der Rollenhalteteil (28) die Rolle derart hält, dass eine Drehachse der Rolle parallel zu einer Drehachse des Nockens ist,
der kammerbildende Teil (27) eine Kolbenringnut (29) aufweist, die an einem Außenumfang des kammerbildenden Teils auf einer Arbeitskammerseite des gestuften Abschnitts (31) ausgebildet ist, und
in der Kolbenringnut ein Kolbenring vorgesehen ist.

2. Fluidarbeitsmaschine nach Anspruch 1,
wobei der kammerbildende Teil (27) umfasst:
einen Körperabschnitt (32), der über den gestuften Abschnitt (31) mit dem Rollenhalteteil (28) verbunden ist, und
einen Abdeckabschnitt (33), der auf der Arbeitskammerseite des Körperabschnitts angeordnet ist und mit dem Körperabschnitt die Kolbenringnut ausbildet.

3. Fluidarbeitsmaschine nach Anspruch 1,
wobei der Kolben (18) ferner einen inneren Durchgang (55-58) umfasst, der mit der Arbeitskammer (20) kommuniziert und der Arbeitsfluid in der Arbeitskammer zu einem Raum zwischen dem Rollenhalteteil und der Rolle zuführt, und
wobei der innere Durchgang einen ersten Durchgang (55a-58a), der in dem Abdeckabschnitt (33) ausgebildet ist, und einen zweiten Durchgang (55b-58b), der in dem Körperabschnitt (32) derart ausgebildet ist, dass er mit dem ersten Durchgang kommuniziert, umfasst.

4. Fluidarbeitsmaschine nach Anspruch 3,
wobei der Rollenhalteteil (28) derart ausgebildet ist, dass der Rollenhalteteil die Rolle (21) umgibt und eine Breite des Rollenhalteteils entlang einer Mittelachse des Zylinders in einer Ebene, die durch die Drehachse der Rolle und die Mittelachse des Zylinders verläuft, in Richtung des Nockens (22) abnimmt.

5. Fluidarbeitsmaschine nach Anspruch 2,
wobei eine Position des Abdeckabschnitts (33) relativ zu dem Körperabschnitt (32) auf eine Weise geregelt wird, dass ein Vorsprung (35), der in einem aus dem Abdeckabschnitt und dem Körperabschnitt ausgebildet ist, in einer Aussparung (34), die in der jeweils anderen aus dem Abdeckabschnitt und dem Körperabschnitt ausgebildet ist, angebracht ist.

6. Fluidarbeitsmaschine nach Anspruch 1,
wobei mindestens eine Oberfläche der Rolle (21) oder eine Kontaktoberfläche (30) des Rollenhalteteils (28), die mit der Rolle in Eingriff steht, gehärtet ist.

7. Fluidarbeitsmaschine nach Anspruch 1,
wobei der Rollenhalteteil (28) einen kronenförmigen Außenumfang aufweist, dessen Durchmesser mit Entfernung von der Arbeitskammer (20) abnimmt.

8. Fluidarbeitsmaschine nach Anspruch 1,
wobei der Kolben (18) ferner einen inneren Durchgang (55-58) umfasst, in dem Arbeitsfluid aus der Arbeitskammer strömt (20), und
wobei eine Rille (60A, 60B; 80A; 80B) an einer Kontaktoberfläche (30) des Rollenhalteteils (28) ausgebildet ist, wobei die Rille mit dem inneren Durchgang derart kommuniziert, dass das Arbeitsfluid aus der Arbeitskammer über den inneren Durchgang zu der Rille eingeführt wird.

9. Fluidarbeitsmaschine nach Anspruch 7,
wobei die Kontaktoberfläche (30) eine gekrümmte Oberfläche ist, welche die Rolle (21) entlang einer Umfangsrichtung der Rolle umgibt, und
wobei die Rille (80A, 80B) mindestens in einem Bereich ausgebildet ist, der eine Schnittlinie zwischen der Kontaktoberfläche und einer Ebene umfasst, die zu einer Mittelachse des Zylinders im rechten Winkel verläuft und eine Drehachse der Rolle umfasst.

10. Fluidarbeitsmaschine nach Anspruch 8,
wobei mehrere der Rillen (60A, 60B; 80A; 80B) an der Kontaktoberfläche (30) vorgesehen sind,
wobei der Kolben (18) mehrere der inneren Durchgänge (55-58) umfasst, die jeweils den mehreren Rillen entsprechen, und
wobei das Fluid aus der Arbeitskammer (20) über die jeweiligen mehreren inneren Durchgänge zu den jeweiligen mehreren Rillen eingeführt wird.

11. Fluidarbeitsmaschine nach Anspruch 8,
wobei mehrere der Rillen (60A, 60B; 80A; 80B) an der Kontaktoberfläche (30) vorgesehen sind, und
wobei die mehreren der Rillen eine erste Rille umfassen, die auf einer in der Drehrichtung der Rolle vorgelagerten Seite einer Mittelachse des Zylinders an der Kontaktoberfläche angeordnet ist, und eine zweite Rille, die auf einer in der Drehrichtung der Rolle nachgelagerten Seite der Mittelachse des Zylinders an der Kontaktoberfläche angeordnet ist.

12. Fluidarbeitsmaschine nach Anspruch 1,
wobei der Kolben ferner einen inneren Durchgang (55-58) umfasst, in dem Arbeitsfluid aus der Arbeitskammer strömt, und
wobei mindestens eine Rille (110A, 110B) an einem Außenumfang des Rollenhalteteils derart ausgebildet ist, dass das Arbeitsfluid über den inneren Durchgang aus der Arbeitskammer zu der mindestens einen Rille eingeführt wird.

13. Fluidarbeitsmaschine nach Anspruch 12,
wobei die Rille (110A, 110B) mindestens in einem Bereich ausgebildet ist, der eine Schnittlinie zwischen einer Ebene, die im rechten Winkel zu einer Mittelachse des Zylinders verläuft und durch eine Drehachse der Rolle verläuft, und einem Außenumfang des Zylinders umfasst.

14. Fluidarbeitsmaschine nach Anspruch 12,
wobei durch die Rille und einen Absatz (113), der durch die Rille an dem Außenumfang des Rollenhalteteils umgeben ist, ein Kissenglied (110A) gebildet wird.

15. Fluidarbeitsmaschine nach Anspruch 12,
wobei die Rille (110A) durch mindestens einen Rillenabschnitt gebildet wird, der sich im rechten Winkel zu der Mittelachse des Zylinders an dem Außenumfang des Rollenhalteteils erstreckt.

16. Windturbinengenerator, umfassend:
mindestens eine Nabe (6), an welcher das Rotorblatt (7) angebracht ist,
eine Hauptwelle (9), die mit der Nabe verbunden ist,
mindestens eine Hydraulikpumpe (11), die an der Hauptwelle befestigt ist,
mindestens einen Hydraulikmotor (12), der durch Drucköl angetrieben wird, das von der Hydraulikpumpe zugeführt wird, und
einen Generator (16), der mit dem Hydraulikmotor gekoppelt ist und der durch Drehung der Hauptwelle nach Auftreffen von Wind an dem Rotorblatt angetrieben wird,
wobei zumindest die Hydraulikpumpe (11) oder der Hydraulikgenerator (16) die Fluidarbeitsmaschine aus Anspruch 1 ist.

## Revendications

1. Machine hydraulique comportant :
un arbre de rotation (9) ;
une came (22) qui tourne avec l'arbre de rotation ;
au moins un cylindre (19) ;
au moins un rouleau (21) qui est disposé de façon rotative de façon à venir en contact avec la came ; et
au moins un piston (18) qui comporte une partie formant une chambre (27) qui forme une chambre de travail (20) avec une paroi intérieure du cylindre, et une partie de maintien de rouleau (28) qui est disposée entre la partie formant une chambre et la came et qui maintient le rouleau, la partie de maintien de rouleau ayant une forme en coupe circulaire correspondant à celle de la partie formant une chambre dans un plan perpendiculaire d'un axe central du cylindre et étant disposée de manière concentrique à la partie formant une chambre, la machine hydraulique étant **caractérisée en ce que**
le piston est formé avec une partie étagée (31) entre la partie de maintien de rouleau (28) et la partie formant une chambre (27) de telle sorte que la partie de maintien de rouleau (28) est formée avec un plus grand diamètre que la partie formant une chambre,
la partie de maintien de rouleau (28) maintient le rouleau de telle sorte qu'un axe de rotation du rouleau est parallèle à un axe de rotation de la came,
la partie formant une chambre (27) a une gorge de segment de piston (29) qui est formée sur une périphérie extérieure de la partie formant une chambre sur un côté chambre de travail de la partie étagée (31), et
un segment de piston est prévu dans la gorge de segment de piston.

2. Machine hydraulique selon la revendication 1, dans laquelle la partie formant une chambre (27) comporte :
une partie de corps (32) qui est reliée à la partie de maintien de rouleau (28) par l'intermédiaire de la partie étagée (31) ; et
une partie de couvercle (33) qui est disposée sur le côté chambre de travail de la partie de corps et forme la gorge de segment de piston avec la partie de corps.

3. Machine hydraulique selon la revendication 1, dans laquelle le piston (18) comporte en outre un passage intérieur (55 à 58) qui communique avec la chambre de travail (20) et qui délivre du fluide de travail dans la chambre de travail à un espace entre la partie de maintien de rouleau et le rouleau, et
dans laquelle le passage intérieur comporte un premier passage (55a à 58a) qui est formé dans la partie de couvercle (33), et un deuxième passage (55b à 58b) qui est formé dans la partie de corps (32) afin de communiquer avec le premier passage.

4. Machine hydraulique selon la revendication 3, dans laquelle la partie de maintien de rouleau (28) est formée de telle sorte que la partie de maintien de rouleau entoure le rouleau (21) et une largeur de la partie de maintien de rouleau le long d'un axe central du cylindre dans un plan passant par l'axe de rotation du rouleau et l'axe central du cylindre diminue vers la came (22).

5. Machine hydraulique selon la revendication 2, dans laquelle une position de la partie de couvercle (33) est réglée par rapport à la partie de corps (32) d'une manière telle qu'une saillie (35) formée dans une de la partie de couvercle et de la partie de corps est montée dans un renfoncement (34) formé dans l'autre de la partie de couvercle et de la partie de corps.

6. Machine hydraulique selon la revendication 1, dans laquelle au moins une d'une surface du rouleau (21) ou d'une surface d'engagement (30) de la partie de maintien de rouleau (28) qui engage le rouleau est durcie.

7. Machine hydraulique selon la revendication 1, dans laquelle la partie de maintien de rouleau (28) a une périphérie extérieure en couronne dont le diamètre est réduit avec la distance par rapport à la chambre de travail (20).

8. Machine hydraulique selon la revendication 1, dans laquelle le piston (18) comporte en outre un passage intérieur (55 à 58) dans lequel du fluide de travail provenant de la chambre de travail (20) s'écoule, et
dans laquelle une rainure (60A, 60B ; 80A, 80B) est formée sur une surface d'engagement (30) de la partie de maintien de rouleau (28), la rainure communiquant avec le passage intérieur de telle sorte le fluide de travail est introduit depuis la chambre de travail jusqu'à la rainure par l'intermédiaire du passage intérieur.

9. Machine hydraulique selon la revendication 7, dans laquelle la surface d'engagement (30) est une surface courbe entourant le rouleau (21) le long d'une direction circonférentielle du rouleau (21), et
dans laquelle la rainure (80A, 80B) est formée au moins dans une zone comprenant une ligne d'intersection entre la surface d'engagement et un plan qui est perpendiculaire à un axe central du cylindre et qui comprend un axe de rotation du rouleau.

10. Machine hydraulique selon la revendication 8, dans laquelle une pluralité de rainures (60A, 60B ; 80A, 80B) est prévue sur la surface d'engagement (30),
dans laquelle le piston (18) comporte une pluralité de passages intérieurs (55 à 58) correspondant respectivement à la pluralité de rainures, et
dans laquelle le fluide est introduit depuis la chambre de travail (20) jusqu'à la pluralité de rainures par l'intermédiaire de la pluralité de passages intérieurs, respectivement.

11. Machine hydraulique selon la revendication 8, dans laquelle une pluralité de rainures (60A, 60B ; 80A, 80B) est prévue sur la surface d'engagement (30), et
dans laquelle la pluralité de rainures comprend une première rainure prévue sur la surface d'engagement sur un côté en amont d'un axe central du cylindre dans la direction de rotation du rouleau et une deuxième rainure prévue sur la surface d'engagement sur un côté en aval de l'axe central du cylindre dans la direction de rotation du rouleau.

12. Machine hydraulique selon la revendication 1, dans laquelle le piston comporte en outre un passage intérieur (55 à 58) dans lequel du fluide de travail provenant de la chambre de travail s'écoule, et
dans lequel au moins une rainure (110A, 110B) est formée sur une périphérie extérieure de la partie de maintien de rouleau de telle sorte que le fluide de travail est introduit par l'intermédiaire du passage intérieur depuis la chambre de travail jusqu'à la au moins une rainure.

13. Machine hydraulique selon la revendication 12, dans laquelle la rainure (110A, 110B) est formée au moins dans une zone comprenant une ligne d'intersection entre un plan perpendiculaire à un axe central du cylindre et passant par un axe de rotation du rouleau et une périphérie extérieure du cylindre.

14. Machine hydraulique selon la revendication 12, dans laquelle un élément de patin (110A) est formé par la rainure et une zone (113) entourée par la rainure sur la périphérie extérieure de la partie de maintien de rouleau.

15. Machine hydraulique selon la revendication 12, dans laquelle la rainure (110A) est formée par au moins une partie de rainure s'étendant perpendiculairement à l'axe central du cylindre sur la périphérie extérieure de la partie de maintien de rouleau.

16. Eolienne comportant :
au moins un moyeu (6) sur lequel la pale (7) est montée ;
un arbre principal (9) qui est relié au moyeu ;
au moins une pompe hydraulique (11) qui est fixée sur l'arbre principal ;
au moins un moteur hydraulique (12) qui est entrainé par de l'huile sous pression délivrée par la pompe hydraulique ; et
un générateur (16) qui est relié au moteur hydraulique et qui est entraîné par une rotation de l'arbre principal lors de la réception de vent sur la pale,
dans laquelle au moins un de la pompe hydraulique (11) et du générateur hydraulique (16) est la machine hydraulique selon la revendication 1.
